# EUROPEAN PATENT SPECIFICATION

(11) **EP 1 694 972 B1**
(45) Date of publication and mention of the grant of the patent: **17.03.2010**
(21) Application number: 04819726.3
(22) Date of filing: 03.12.2004
(51) Int. Cl.: F16B 37/12, F16B 37/04, F16B 11/00, F16B 5/01

(54) **ANCHORING METHODS AND PRODUCTS OF SUCH METHODS**
VERANKERUNGSVERFAHREN UND DAMIT HERGESTELLTE PRODUKTE
PROCEDES DE FIXATION ET PRODUITS OBTENUS PAR DE TELS PROCEDES

(30) Priority: 03.12.2003 GB 0328043
(43) Date of publication of application: 30.08.2006
(73) Proprietor: Hoy, Kevin Douglas, Great Missenden Buckinhamshire HP19 9NP (GB)
(72) Inventor: Hoy, Kevin Douglas, Great Missenden Buckinhamshire HP19 9NP (GB)
(74) Representative: Coles, Graham Frederick
(86) International application number: PCT/GB2004/005069
(87) International publication number: WO 2005/054692

(56) References cited:
- EP-A- 0 818 631
- EP-A- 1 024 304
- US-A- 3 019 865
- US-A- 3 716 092

## Description

This invention relates to methods of anchoring a fitting having a base and a threaded portion upstanding from the base, to a base member, of the kind in which a cylindrical cavity is formed in the base member to open from a surface of the base member, and the method includes providing a cylindrical plug-element having an axial bore therethrough, inserting the fitting into the plug-element with the threaded portion extending lengthwise of the bore and its base engaged in a recess in the underside of the plug-element for retention there, and after the fitting has been inserted into the plug-element as aforesaid, entering the plug-element into the cavity and retaining it there adhesively with the top of the plug-element substantially flush with said surface and the fitting trapped in the plug-element.

A method of anchoring of the above-specified kind is known from US-A-3,019,865 in which a fitting in the form of a nut is anchored within an open-top cavity formed in the upper surface of a lightweight panel of sandwich construction. The method involves entering an internally-threaded sleeve of the nut into the bore of a shell through a bottom flange of the shell. The nut is restrained against rotation within the shell by engagement of radially-extending lugs of the nut in radial recesses of the bottom flange, and is blocked from leaving the shell by a disc secured to the bottom flange over it. The shell, with the nut trapped inside, is entered in the cavity and is retain there with the top of the shell substantially flush with the upper surface of the panel, by filling the cavity with synthetic resin.

An alternative method of anchoring is described in US-A-3,716,092 in which a fitting having an internally-threaded neck, is retained within a cavity in a panel of honeycomb structure. The neck of the fitting is surrounded by an annular collar that retains a thermoplastic or thermoset adhesive, and the method includes inserting the fitting into the cavity with the collar projecting above the upper surface of the panel. Heat is then applied to the projecting collar to cause the thermoplastic or thermoset material to flow out to fill the cavity and into the surrounding honeycomb structure. As a result, the collar sinks into the cavity to be flush with the upper surface of the panel and the fitting is bonded into the panel by the set adhesive.

EP-A-0 818 631 describes a method of anchoring in which a fitting having an internally-threaded cylindrical portion projecting from a base portion, is also retained within a cavity in a panel of honeycomb structure by bonding. The fitting in this case is trapped within a two-part body, the two parts clipping together with the cylindrical portion projecting into a bore through the body. Although the fitting is restrained from rotation within the body, it has a degree of freedom for lateral movement within it so as to overcome alignment difficulties in fixing to the fitting when the body is bonded into the panel-cavity.

A method of anchoring which involves a fitting that has a base and a threaded portion upstanding from the base, is also known from EP-A-1 024 304. The fitting is retained with its threaded portion projecting from its base into a bore that opens from the bottom of a blind hole.

It is an object of the present invention to provide a method of said above-specified kind of anchoring a fitting to a base member, and a fitting anchored to a base member, where the base member is of mineral material that has a tendency to crack and allow the fitting to pull out.

According to one aspect of the invention a method of anchoring a fitting to a base member, of said above-specified kind, is **characterised in that** the base member and the plug-element are both of a mineral composition, that the plug-element has a diameter and thickness substantially the same as the diameter and depth respectively of the cavity so as to be a close fit within it, and the plug-element with the fitting trapped in it, is retained in the cavity by adhesive film.

According to another aspect of the invention there is provided a fitting anchored to a base member, in which the fitting has a base and a threaded portion upstanding from the base, a cylindrical cavity opens from a surface of the base member, a plug-element which has an axial bore therethrough is retained adhesively in the cylindrical cavity with its top substantially flush with said surface, the threaded portion of the fitting extends lengthwise of the bore of the plug-element, and the base of the fitting is engaged in a recess in the underside of the plug-element for retention there, **characterised in that** the base member and the plug-element are both of a mineral composition, the plug-element has a diameter and thickness substantially the same as the diameter and depth respectively of the cavity so as to be a close fit within the cavity, and the plug-element with the fitting trapped in it, is retained in the base member by adhesive film.

The fitting of both aspects of the invention may be a fastener for use in clamping or otherwise securing an item to the surface of the base member. The fitting may be, for example, a screw-threaded nut, having a screw thread aligned with the bore for engagement by a screw-threaded bolt, rod or other member inserted in the bore, for securing the item to the base member. It may, however, have an internally-threaded tubular portion that projects into the bore from under the plug-element; the tubular portion may extend the length of the bore to open at the surface of the base member, but may alternatively extend sufficiently to project beyond this. As an alternative, the fitting, whether for use as a fastener or otherwise, may involve a rod or other component that extends via the bore to project from the surface.

The base of the fitting may be located on the bottom of the cavity under the plug-element, and this and the underside of the plug-element may be engaged with one another to restrain the fitting from turning relative to the plug-element. In this regard, the underside of the plug-element may be recessed, and the base of the fitting may be a flange that is inset within the recess when the plug-element is entered into the cavity. The flange may be of an elongate configuration and the recess may then be of a substantially conformal configuration for restraining the fitting from turning relative to the plug-element.

The base member (which, for example, may be in a sheet or slab form) and the plug-element may both be of natural mineral or of a man-made mineral material having a composition containing natural mineral particles in acrylic resin.

The fitting and the plug-element may be marketed in combination with one another for use in the provision of an anchored fitting in accordance with the invention.

A method of anchoring a fitting in a slab member, and the slab member with an anchored fitting as a product of the method, in accordance with the present invention, will now be described, by way of example, with reference to the accompanying drawing, in which:
Figures 1 and 2 are, respectively, a sectional side-elevation and an exploded sectional view showing a fitting anchored to a slab base-member, according to the invention;
Figures 3 and 4 are, respectively, a sectional side elevation and a plan view from above of the anchored fitting of the arrangement of Figures 1 and 2; and
Figures 5 and 6 are, respectively, a sectional side elevation and a plan view from below of a plug-element used in combination with the fitting of Figures 3 and 4 for anchoring as illustrated in Figure 1.

The method and product of the method, to be described, involve the anchoring of a metal (or plastics) fastener in a slab member of a man-made mineral material that has a composition containing natural mineral particles in acrylic resin. In particular, the material of the slab member is a solid non-porous surfacing material which is homogeneously composed of one-third polymethyl methacrylate and two-thirds natural minerals with mineral aluminium trihydrate derived from bauxite as a main component, and which is sold under the Registered Trade Mark CORIAN by E.I DuPont de Nemours and Co..

The anchoring of a fastening to such material has previously been carried out by drilling a hole in the material and inserting a threaded boss of brass or nylon into the hole for retention there as a tight fit. This has not proved satisfactory, in that cracking of the man-made material may result and the boss is prone to pull out. Although adhesive for bonding the mineral material to itself is available, this is not effective for bonding metal or plastics material to it. The method and the product of the method, according to the invention, overcome these problems to provide strong anchoring.

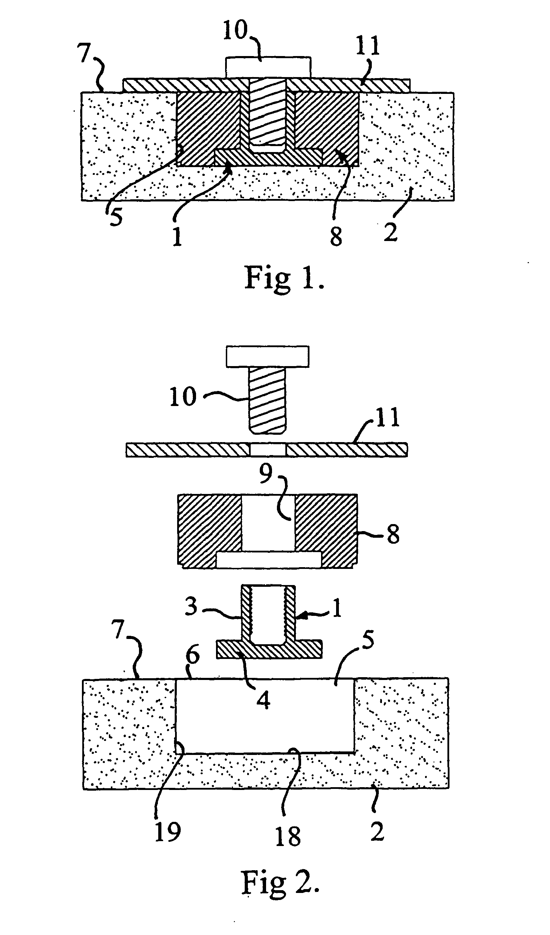

Referring to Figures 1 and 2, a stainless-steel fastener 1 is in this case anchored in the slab member 2 of the man-made mineral material. The fastener 1 has (as indicated most clearly in Figure 2) an internally-threaded tubular portion 3 that is upstanding from a flanged-base 4, and is located within a respective cylindrical-cavity 5 in the member 2. The cavity 5 has an opening 6 in a face 7 of the slab member 2, and this opening 6 is plugged within the cavity 5 substantially flush with the face 7, by a cylindrical element 8 of the same material as the member 2. The tubular portion 3 of the fastener 1 is located within a central bore 9 of the element 8 to extend the length of the bore 9 and open substantially flush with the face 7.

The element 8 is bonded in the cavity 5 using an appropriate adhesive for bonding the man-made mineral material to itself; an appropriate adhesive is that sold as "Joint Adhesive for DuPont CORIAN" under the Registered Trade Marks DUPONT and CORIAN, by E.I DuPont de Nemours and Co.. With the bonding of the element 8 in this way, the flanged-base 4 of the fastener 1 is securely trapped in its cavity 5 and, as illustrated in Figures 1 and 2, may be engaged by a screw-bolt 10 to clamp a fitment 11 to the face 7 of the member 2.

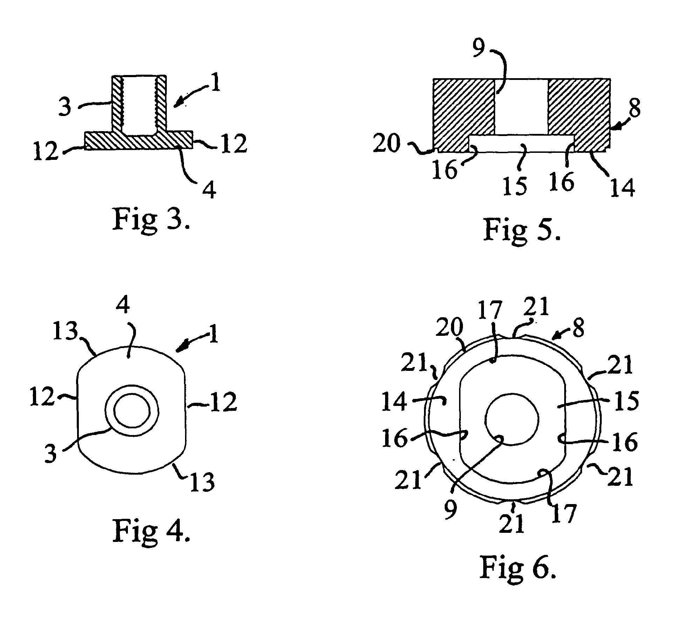

Further details of the fastener 1 and element 8, in particular the way in which the fastener 1 is restrained from turning within its cavity 5, and bonding of the element 8 is facilitated, will now be described with reference to Figures 3 to 6.

Referring to Figure 3 and 4, the fastener 1 is of one-piece construction, with its flanged-base 4 of elongate configuration having straight, parallel sides 12 and rounded ends 13. As shown in Figures 5 and 6, the underside 14 of the element 8 has a recess 15 that is to the same elongate configuration so that it receives the flanged-base 4 inset therein. More especially, the recess 15 has straight, parallel sides 16 and rounded ends 17 conforming to the sides 12 and ends 13 respectively.

Accordingly, the method of assembly with anchoring of the fastener 1 within the slab member 2 can be readily carried out, once the appropriate cavity 5 has been drilled, simply by first bringing the fastener 1 towards the underside 14 of the element 8 with the tubular portion 3 in register with the bore 9 within the recess 15. The fastener 1 is now closed onto the underside 14 to extend the portion 3 the full length of the bore 9 and inset the flanged-base 4 within the recess 15. Abutment of the sides 12 with the sides 16 in this assembly precludes turning of the fastener 1 relative to the element 8.

The assembled fastener 1 and element 8 are now inserted into the cavity 5 to bring the flanged-base 4 down into abutment with the bottom 18 of the cavity 5, after a film of the appropriate adhesive has been deposited on the bottom 18 and side wall 19 of the cavity 5 (Figure 2). The underside 14 of the element 8 is cut away to leave a peripheral channel 20 with interconnected axially-extending surface channels 21 for dispersal of surplus adhesive (Figures 5 and 6).

In one application of the invention a slab corresponding to the slab 2 forms a door to a kitchen cabinet, and a bracket of a hinge is clamped to the back face of the slab using four screw-bolts. Each screw-bolt is engaged tightly with a fastener corresponding to the fastener 1, as used in combination with a plug-element corresponding to the element 8, for anchoring the fastener firmly to the slab.

## Claims

1. A method of anchoring a fitting (1) having a base (4) and a threaded portion (3) upstanding from the base (4), to a base member (2), in which a cylindrical cavity (5) is formed in the base member (2) to open (6) from a surface (7) of the base member (2), and the method includes providing a cylindrical plug-element (8) having an axial bore (9) therethrough, inserting the fitting (1) into the plug-element (8) with the threaded portion (3) extending lengthwise of the bore (9) and its base (4) engaged in a recess (15) in the underside of the plug-element (8) for retention there, and after the fitting (1) has been inserted into the plug-element (8) as aforesaid, entering the plug-element (8) into the cavity (5) and retaining it there adhesively with the top of the plug-element (8) substantially flush with said surface (7) and the fitting (1) trapped in the plug-element (8), **characterised in that** the base member (2) and the plug-element (8) are both of a mineral composition, that the plug-element (8) has a diameter and thickness substantially the same as the diameter and depth respectively of the cavity (5) so as to be a close fit within it, and the plug-element (8) with the fitting (1) trapped in it, is retained in the cavity (5) by adhesive film

2. A method according to Claim 1 wherein the threaded portion of the fitting (1) is an internally-threaded tubular portion (3).

3. A method according to Claim 2 wherein the tubular portion (3) extends the length of the bore (9) to open at said surface (7) of the base member (2).

4. A method according to any one of Claims 1 to 3 wherein the base (4) of the fitting (1) is of an elongate configuration and the recess (15) is of a substantially conformal configuration for restraining the fitting (1) from turning relative to the plug-element (8).

5. A method according to any one of Claims 1 to 4 wherein adhesive is entered in the cavity (5) before the step of entering the plug-element (8) into it, and surplus adhesive is dispersed from the cavity (5) via channels (20,21) in the plug-element (8).

6. A fitting (1) anchored to a base member (2) of mineral composition, as the product of the method according to any one of Claims 1 to 5.

7. A fitting (1) anchored to a base member (2), in which the fitting (1) has a base (4) and a threaded portion (3) upstanding from the base (4), a cylindrical cavity (5) opens (6) from a surface (7) of the base member (2), a plug-element (8) which has an axial bore (9) therethrough is retained adhesively in the cylindrical cavity (5) with its top substantially flush with said surface (7), the threaded portion (3) of the fitting (1) extends lengthwise of the bore (9) of the plug-element (8), and the base (4) of the fitting is engaged in a recess (15) in the underside of the plug-element (8) for retention there, **characterised in that** the base member (2) and the plug-element (8) are both of a mineral composition, the plug-element (8) has a diameter and thickness substantially the same as the diameter and depth respectively of the cavity (5) so as to be a close fit within the cavity (5), and the plug-element (8) with the fitting (1) trapped in it, is retained in the base member (2) by adhesive film.

8. A fitting (1) anchored according to Claim 7 wherein the threaded portion of the fitting (1) is an internally-threaded tubular portion (3).

9. A fitting (1) anchored according to Claim 8 wherein the tubular portion (3) extends the length of the bore (9) to open at said surface (7) of the base member (2).

10. A fitting (1) anchored according to any one of Claims 7 to 9 wherein the base (4) of the fitting (1) is of an elongate configuration and the recess (15) is of a substantially conformal configuration for restraining the fitting (1) from turning relative to the plug-element (8).

11. A fitting (1) anchored according to any one of Claims 7 to 10 wherein the plug-element (8) includes channels (20,21) for dispersing surplus adhesive from the cavity (5).

## Patentansprüche

1. Verfahren zum Verankern eines Verbindungselements (1), das eine Basis (4) und einen von der Basis (4) aus abstehenden Gewindeabschnitt (3) aufweist, an einem Basiselement (2), wobei in dem Basiselement (2) ein zylindrischer Hohlraum (5) gebildet ist, der zu einer Oberfläche (7) des Basiselements (2) hin offen ist, wobei das Verfahren aufweist:
Bereitstellen eines zylindrischen Steckelements (8), das eine hindurchgehende axiale Bohrung (9) aufweist,
Einsetzen des Verbindungselements (1) in das Steckelement (8), wobei sich der Gewindeabschnitt (3) längs der Bohrung (9) erstreckt und die Basis (4) in eine Aussparung (15) in der unteren Seite des Steckelements (4) greift, um dort gehalten zu werden, und,
nachdem das Verbindungselement (1) wie oben angegeben in das Steckelement (8) eingesetzt worden ist, Hineinbringen des Steckelements (8) in den Hohlraum (5) und Halten des Steckelements klebend darin, wobei die Oberseite des Steckelements (8) im wesentlichen bündig mit der Oberfläche (7) ist und das Verbindungselement (1) in dem Steckelement (8) festgehalten ist,
**dadurch gekennzeichnet, daß** sowohl das Basiselement (2) als auch das Steckelement (8) eine mineralische Materialzusammensetzung haben, daß das Steckelement (8) einen Durchmesser und eine Dicke hat, die im wesentlichen jeweils gleich dem Durchmesser und der Tiefe des Hohlraums (5) sind, so daß es in diesem eng eingepaßt ist, und das Steckelement (8) mit dem darin festgehaltenen Verbindungselement (1) mit Hilfe einer Klebstoffschicht in dem Hohlraum (5) gehalten wird.

2. Verfahren nach Anspruch 1, wobei der Gewindeabschnitt des Verbindungselements (1) ein rohrförmiger Abschnitt (3) mit Innengewinde ist.

3. Verfahren nach Anspruch 2, wobei sich der rohrförmige Abschnitt (3) längs der Bohrung (9) erstreckt, um zu der Oberfläche (7) des Basiselements (2) hin offen zu sein.

4. Verfahren nach einem der Ansprüche 1 bis 3, wobei die Basis (4) des Verbindungselements (1) eine längliche Gestalt hat und die Aussparung (15) eine im wesentlichen dazu passende Gestalt hat, um das Verbindungselement (1) daran zu hindern, sich relativ zu dem Steckelement (8) zu drehen.

5. Verfahren nach einem der Ansprüche 1 bis 4, wobei vor dem Schritt des Hineinbringens des Steckelements (8) in den Hohlraum (5) Klebstoff darin hineingebracht wird und überflüssiger Klebstoff über Kanäle (20,21) in dem Steckelement (8) aus dem Hohlraum (5) abgeführt wird.

6. An einem Basiselement (2) verankertes Verbindungselement
(1) einer mineralischen Materialzusammensetzung als Produkt des Verfahrens nach einem der Ansprüche 1 bis 5.

7. An einem Basiselement (2) verankertes Verbindungselement (1), wobei das Verbindungselement (1) eine Basis (4) und einen von der Basis (4) aus abstehenden Gewindeabschnitt (3) hat, ein zylindrischer Hohlraum (5) zu einer Oberfläche (7) des Basiselements (2) hin offen (6) ist, ein Steckelement (8), das eine hindurchgehende axiale Bohrung (9) hat, klebend in dem zylindrischen Hohlraum (5) gehalten wird, wobei seine Oberseite im wesentlichen bündig mit der Oberfläche (7) ist, der Gewindeabschnitt (3) des Verbindungselements (1) sich längs der Bohrung (9) des Steckelements (8) erstreckt und die Basis (4) des Verbindungselements in eine Aussparung (15) in der Unterseite des Steckelements (8) greift, um dort gehalten zu werden, **dadurch gekennzeichnet, daß** sowohl das Basiselement (2) als auch das Steckelement (8) eine mineralische Materialzusammensetzung haben, daß das Steckelement (8) einen Durchmesser und eine Dicke hat, die im wesentlichen jeweils gleich dem Durchmesser und der Tiefe des Hohlraums (5) sind, so daß es in diesem Hohlraum (5) eng eingepaßt ist, und das Steckelement (8) mit dem darin festgehaltenen Verbindungselement (1) mit Hilfe einer Klebstoffschicht in dem Basiselement (2) gehalten wird.

8. Verankertes Verbindungselement (1) nach Anspruch 7, wobei der Gewindeabschnitt des Verbindungselements (1) ein rohrförmiger Abschnitt (3) mit Innengewinde ist.

9. Verankertes Verbindungselement (1) nach Anspruch 8, wobei sich der rohrförmige Abschnitt (3) längs der Bohrung (9) erstreckt und zu der Oberfläche (7) des Basiselements (2) hin offen ist.

10. Verankertes Verbindungselement (1) nach einem der Ansprüche 7 bis 9, wobei die Basis (4) des Verbindungselements (1) eine längliche Gestalt hat und die Aussparung (15) eine im wesentlichen dazu passende Gestalt hat, um das Verbindungselement (1) daran zu hindern, sich relativ zu dem Steckelement (8) zu drehen.

11. Verankertes Verbindungselement (1) nach einem der Ansprüche 7 bis 10, wobei das Steckelement (8) Kanäle (20,21) aufweist, um überschüssigen Klebstoff aus dem Hohlraum (5) abzuführen.

## Revendications

1. Procédé d'ancrage d'une pièce de fixation (1) ayant une base (4) et une partie filetée (3) s'élevant à partir de la base (4), à un élément de base (2), dans lequel une cavité cylindrique (5) est formée dans l'élément de base (2) pour déboucher (6) à partir d'une surface (7) de l'élément de base (2), et le procédé comprend la fourniture d'un élément obturateur cylindrique (8) ayant un alésage axial (9) à travers celui-ci, l'insertion de la pièce de fixation (1) dans l'élément obturateur (8) avec la partie filetée (3) s'étendant dans la direction de la longueur de l'alésage (9) et sa base (4) engagée dans un évidement (15) dans la surface inférieure de l'élément obturateur (8) pour une retenue à cet endroit, et après que la pièce de fixation (1) a été insérée dans l'élément obturateur (8) comme susmentionné, l'introduction de l'élément obturateur (8) dans la cavité (5) et la retenue de celui-ci de manière adhésive avec le dessus de l'élément obturateur (8) sensiblement affleurant à ladite surface (7) et la pièce de fixation (1) emprisonnée dans l'élément obturateur (8), **caractérisé en ce que** l'élément de base (2) et l'élément obturateur (8) sont tous les deux de composition minérale, que l'élément obturateur (8) a un diamètre et une épaisseur sensiblement identiques respectivement au diamètre et à la profondeur de la cavité (5) de manière à être ajusté sans jeu à l'intérieur de celle-ci, et l'élément obturateur (8) avec la pièce de fixation (1) emprisonnée dans celui-ci, est retenu dans la cavité (5) par un film adhésif.

2. Procédé selon la revendication 1, dans lequel la partie filetée de la pièce de fixation (1) est une partie tubulaire (3) filetée intérieurement.

3. Procédé selon la revendication 2, dans lequel la partie tubulaire (3) prolonge la longueur de l'alésage (9) pour déboucher sur ladite surface (7) de l'élément de base (2).

4. Procédé selon l'une quelconque des revendications 1 à 3, dans lequel la base (4) de la pièce de fixation (1) est de configuration allongée et l'évidement (15) est de configuration sensiblement adaptée pour empêcher la pièce de fixation (1) de tourner par rapport à l'élément obturateur (8).

5. Procédé selon l'une quelconque des revendications 1 à 4, dans lequel un adhésif est introduit dans la cavité (5) avant l'étape d'introduction de l'élément obturateur (8) dans celle-ci, et de l'adhésif en surplus est dispersé à partir de la cavité (5) par l'intermédiaire de canaux (20, 21) dans l'élément obturateur (8).

6. Pièce de fixation (1) ancrée à un élément de base (2) de composition minérale, en tant que produit du procédé selon l'une quelconque des revendications 1 à 5.

7. Pièce de fixation (1) ancrée à un élément de base (2), dans laquelle la pièce de fixation (1) a une base (4) et une partie filetée (3) s'élevant à partir de la base (4), une cavité cylindrique (5) débouche (6) à partir d'une surface (7) de l'élément de base (2), un élément obturateur (8) qui a un alésage axial (9) à travers celui-ci est retenu de manière adhésive dans la cavité cylindrique (5) avec sa partie supérieure sensiblement affleurante à ladite surface (7), la partie filetée (3) de la pièce de fixation (1) s'étend dans la direction de la longueur de l'alésage (9) de l'élément obturateur (8), et la base (4) de la pièce de fixation est engagée dans un évidement (15) dans la surface inférieure de l'élément obturateur (8) pour une retenue à cet endroit, **caractérisée en ce que** l'élément de base (2) et l'élément obturateur (8) sont tous les deux de composition minérale, l'élément obturateur (8) a un diamètre et une épaisseur sensiblement identiques respectivement au diamètre et à la profondeur de la cavité (5) de manière à être ajusté sans jeu à l'intérieur de la cavité (5), et l'élément obturateur (8) avec la pièce de fixation (1) emprisonnée dans celui-ci, est retenu dans l'élément de base (2) par un film adhésif.

8. Pièce de fixation (1) ancrée selon la revendication 7, dans laquelle la partie filetée de la pièce de fixation (1) est une partie tubulaire (3) filetée intérieurement.

9. Pièce de fixation (1) ancrée selon la revendication 8, dans laquelle la partie tubulaire (3) prolonge la longueur de l'alésage (9) pour déboucher sur ladite surface (7) de l'élément de base (2).

10. Pièce de fixation (1) ancrée selon l'une quelconque des revendications 7 à 9, dans laquelle la base (4) de la pièce de fixation (1) est de configuration allongée et l'évidement (15) est de configuration sensiblement adaptée pour empêcher la pièce de fixation (1) de tourner par rapport à l'élément obturateur (8).

11. Pièce de fixation (1) ancrée selon l'une quelconque des revendications 7 à 10, dans laquelle l'élément obturateur (8) comprend des canaux (20, 21) pour disperser de l'adhésif en surplus à partir de la cavité (5).
